# EUROPEAN PATENT SPECIFICATION

(11) **EP 1 818 604 B1**
(45) Date of publication and mention of the grant of the patent: **22.07.2009**
(21) Application number: 07101705.7
(22) Date of filing: 05.02.2007
(51) Int. Cl.: F21S 9/03, F21W 101/02

(54) **Lighting network**
Beleuchtungsnetz
Réseau lumineux

(30) Priority: 08.02.2006 IT MI20060213
(43) Date of publication of application: 15.08.2007
(73) Proprietor: iGUZZINI ILLUMINAZIONE S.p.A., 62019 Recanati-Macerata (IT)
(72) Inventor: Guzzini, Giannunzio, 62019 Recanati (Macerata) (IT)
(74) Representative: De Gregori, Antonella

(56) References cited:
- US-A- 4 384 317
- US-A- 6 013 985
- US-A1- 2005 135 101
- US-A1- 2006 007 549
- US-B1- 6 213 624
- US-B1- 6 238 076

## Description

The present description refers to lighting appliances adapted to be inserted in a lighting network.

In particular, the lighting network comprises a plurality of such appliances arranged in correspondence of nodes of the network itself, which can be made by means of cables, for example intertwined metal cables, so to be flexible and capable of covering solid bodies such as buildings, of apartment block type, hotels or bridges, monuments, solid structures in general.

Analogue and/or digital lighting networks are known at the state of the art which are provided with a plurality of light points connected to a lighting source, which provides the electrical energy, and controlled by one or more control units which regulate the lighting intensity and colour. Such networks of known type foresee that the electrical power supply is distributed to all the lighting sources by means of an electric cable network adapted to connect the sources with each other and with the electrical energy source, in series and/or in parallel according to specific needs. The power supply is therefore centralised, and moreover the lighting colour and intensity is decided in a centralised manner by the control unit.

Document US 6013985 describes a lighting appliance according to the preamble of claim 1.

The applicant has submitted the problem of making more flexible the possibilities for varying the intensity and colour of the light emitted by each network appliance source.

To such end, the same applicant has made a lighting network in which each lighting appliance is self-powered and moreover foresees a processing unit inside, which depending on the accumulated available electrical energy regulates the time, intensity and colour of the emitted light.

The present invention concerns a lighting appliance according to claim 1.

Further objects and advantages of the present invention will be clear from the following description and from the attached drawings, provided merely as a exemplifying and non-limiting example, wherein:

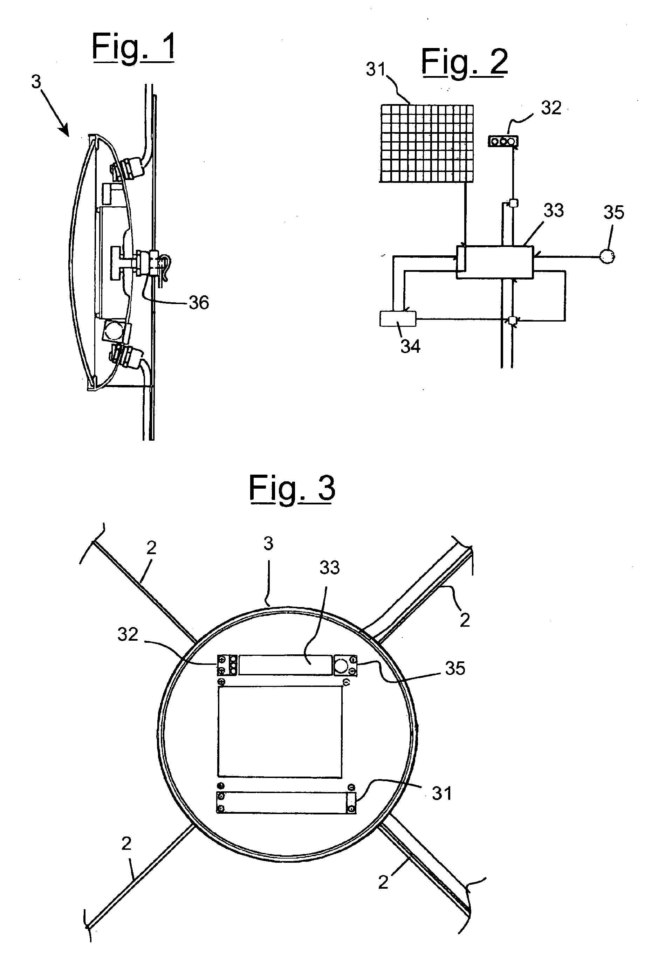

- Figure 1 is a schematic side view of a lighting device of the network according to the present invention;
- Figure 2 is an exemplifying block diagram of the electric circuit of the lighting appliance of figure 1 according to the present invention;
- Figure 3 is a schematic front view of a lighting appliance of the network according to the present invention;
- Figure 4 is a schematic view of a portion of the lighting network provided with a plurality of lighting appliances according to the present invention placed on a front portion of a building;

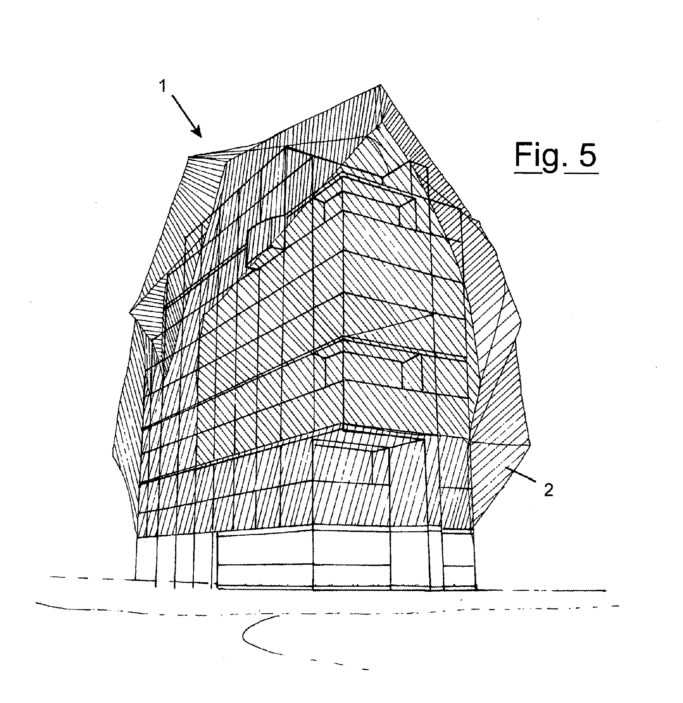

- Figure 5 is a view of the lighting network arranged in operating conditions as a building covering.

With reference to the mentioned figures, the lighting network 1 according to the present invention comprises a plurality of support cables 2, for example metal cables which are intertwined so to form a mesh. Lighting appliances 3 are placed on at least part of the nodes formed by said mesh, for example one appliance for each node, adapted to light the mesh in operating conditions.

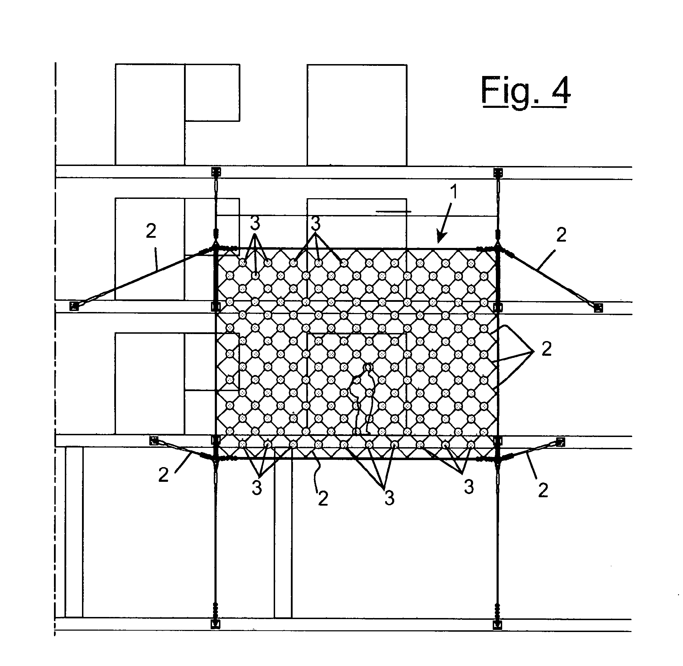

Several ends of the network support cables are adapted to bind the network securely to the building to be covered, as illustrated, for example, in figure 4. Each lighting appliance preferably comprises at least one solar panel 31 including photovoltaic cells for generating electrical energy from solar light, a LED lighting source 32, preferably RGB LED, a processing unit 33 and a battery 34.

The solar panel is preferably connected to the battery of electrical energy which is accumulated by such battery. The electronic processing unit receives information from the battery regarding its charge status and consequently controls the turn-on modes of the lighting source according to a predetermined program. The lighting appliance can also comprise a luminosity sensor 35 which transmits information related to the luminosity of the environment to the electronic processing unit, for example referred to the various moments of the day (daytime, night, sunrise, sunset etc...).

Moreover, every lighting appliance of the network can be provided with an input for an external power supply, for example achievable by means of electric cables which are associated with the network support cables. Advantageously, every electronic processing unit of the network can be provided with an input for a control or instruction signal of the unit coming from outside the network (for example from a remote unit).

Inside every processing unit, a predetermined lighting program can be stored.

For example, the mesh or network can be programmed so to function as a kind of solar energy thermometer, thereby reproducing at night that which occurred during the day; hence the appliances are charged according to their position in the network and their orientation. As a function of how much the batteries are charged, the electronic processing unit turns on the RGB LEDs in one colour or another, for example: batteries charged at 50%, blue colour. The appliances can be completely autonomous, in the sense that they can supply their own power by means of solar panels.

The colour choice occurs according to the energy available in the battery, in a minimum quantity so to be able to ensure the functioning for a predetermined number of hours, for example eight hours; on the other hand, if there is not enough energy in the battery, the product does not turn on. The energy consumption is generally different, in fact, for every colour.

The lighting device is contained inside a casing of preferably circular form and is provided with binding means 36 to said support cables.

## Claims

1. Lighting appliance comprising
at least one solar panel (31)
at least one LED lighting source (32)
an electronic processing unit (33)
a battery (34) adapted to store the electrical energy provided by such solar panel,
such processing unit receives information on the charge status of such battery and consequently controls the turn-on modes of the lighting source according to a predetermined program,
**characterized in that**
the processing unit determines the colour choice of the lighting source as a function of the energy available in the battery, in a minimum quantity so to ensure the functioning for a predetermined number of hours.

2. Lighting appliance according to claim 1, wherein such lighting appliance comprises a luminosity sensor (35), which transmits information related to the luminosity of the environment to the electronic processing unit.

3. Lighting appliance according to claim 1, wherein the lighting source comprises RGB LED diodes.

4. Lighting network **characterised in that** it comprises a plurality of intertwined support cables forming a mesh, a lighting appliance according to cLaim 1 being associated with at least one node of said mesh.

5. Lighting network according to claim 4, wherein a lighting appliance is contained inside a casing of preferably circular form and is provided with binding means (36) to said support cables.

## Patentansprüche

1. Beleuchtungsvorrichtung, mit
- wenigstens einer Solarzellenplatte (31),
- wenigstens einer LED-Lichtquelle (32),
- einer elektronischen Verarbeitungseinheit (33),
- einer Batterie (34), die von solch einer Solarzellenplatte gelieferte elektrische Energie zu speichern vermag, wobei die Verarbeitungseinheit eine Information über den Ladestatus der Batterie erhält und die Einschaltmodi der Lichtquelle gemäß einem vorbestimmten Programm entsprechend steuert,
**dadurch gekennzeichnet, dass** die Verarbeitungseinheit die Farbwahl der Lichtquelle in Abhängigkeit der in der Batterie verfügbaren Energie in einer Minimalmenge vornimmt, um den Betrieb für eine vorbestimmte Anzahl von Stunden zu gewährleisten.

2. Beleuchtungsvorrichtung nach Anspruch 1, bei der die Beleuchtungsvorrichtung einen Helligkeitssensor (35) aufweist, der die Helligkeit der Umgebung betreffende Information zur elektronischen Verarbeitungseinheit überträgt.

3. Beleuchtungsvorrichtung nach Anspruch 1, bei der die Lichtquelle RGB-Leuchtdioden umfasst.

4. Beleuchtungsnetzwerk,
**dadurch gekennzeichnet, dass** es eine Mehrzahl verflochtener, ein Netz bildender Versorgungsleitungen aufweist, wobei eine Beleuchtungsvorrichtung nach Anspruch 1 zumindest einem Knoten des Netzes zugehörig ist.

5. Beleuchtungsnetzwerk nach Anspruch 4, bei dem eine Beleuchtungsvorrichtung innerhalb eines Gehäuses von vorzugsweise kreisförmiger Gestalt aufgenommen und mit Verbindungsmitteln (36) zu den Versorgungsleitungen versehen ist.

## Revendications

1. Appareil d'éclairage comprenant :
au moins un panneau solaire (31),
au moins une source d'éclairage LED (32),
une unité de traitement électronique (33),
une batterie (34) adaptée pour stocker l'énergie électrique fournie par ledit panneau solaire,
ladite unité de traitement reçoit des informations concernant l'état de charge de ladite batterie et par conséquent commande les modes d'allumage de la source d'éclairage selon un programme prédéterminé,
**caractérisé en ce que**
l'unité de traitement détermine le choix de couleur de la source d'éclairage en fonction de l'énergie disponible dans la batterie, dans une quantité minimum afin de garantir le fonctionnement pendant un nombre prédéterminé d'heures.

2. Appareil d'éclairage selon la revendication 1, dans lequel ledit appareil d'éclairage comprend un capteur de luminosité (35) qui transmet des informations connexes à la luminosité de l'environnement à l'unité de traitement électronique.

3. Appareil d'éclairage selon la revendication 1, dans lequel la source d'éclairage comprend des diodes LED RVB.

4. Réseau d'éclairage **caractérisé en ce qu'**il comprend une pluralité de câbles de support entrelacés formant une maille, un appareil d'éclairage selon la revendication 1 étant associé à au moins un noeud de ladite maille.

5. Réseau d'éclairage selon la revendication 4, dans lequel un appareil d'éclairage est contenu à l'intérieur d'un boîtier de forme de préférence circulaire et est pourvu de moyens de liaison (36) auxdits câbles de support.
